Europäisches Patentamt

European Patent Office

Office européen des brevets

(11) Publication number: **0 070 616**
A1

# EUROPEAN PATENT APPLICATION

(21) Application number: **82302719.8**

(22) Date of filing: **26.05.82**

(51) Int. Cl.³: **G 11 B 23/04**

(30) Priority: **27.05.81 US 267559**
**28.12.81 US 334836**

(43) Date of publication of application: **26.01.83**
**Bulletin 83/4**

(84) Designated Contracting States: **BE DE FR GB IT NL**

(71) Applicant: **TECHNICOLOR, INC., 2049 Century Park East Suite 2400, Los Angeles California 90067 (US)**

(72) Inventor: **Spicer, Barry Keith, 11270 Town and Country Drive, Riverside California 90067 (US)**
Inventor: **Rubenack, Ronald Dennis, 17572 Santa Cristobal, Fountain Valley California 92708 (US)**

(74) Representative: **Lander, John Eaton, Ridge House The Ridge Woldingham, Caterham Surrey CR3 7AX (GB)**

(54) Improved cassette hub locking mechanism.

(57) An improved cassette hub locking mechanism comprising in one embodiment a hub including a locking flange between a web-carrying portion of the hub and a bottom housing member of the cassette. Spring means urges the hub toward the bottom member and locking means between the locking flange and the bottom member prevents rotation of the hub when the locking flange and hub are engaged. Another embodiment of the locking mechanism includes a hub and a locking member between the hub and a top member of the cassette. Spring means urges the locking member into engagement with the hub to lock the hub and a play/record apparatus spindle inserted into the hub abuts the locking member to disengage the locking member and the hub, thereby allowing rotation of the hub. In a further embodiment a gear cooperates with a housing member and functions as a locking member as well as a driving member. A spring urges gear into a locking position but is released when the cassette engages a part of an associated cassette record or play apparatus.

-1-

## DESCRIPTION

IMPROVED CASSETTE HUB LOCKING MECHANISM

Background of the Invention

The present invention relates generally to magnetic tape and film cassettes and, more particularly, to an improved hub locking mechanism therefore.

Various cassettes are known that include hubs upon which is wound a web of suitable record/play media such as magnetic tape or photographic film. In such cassettes, it is often desirable to lock the hubs when the cassette is removed from a record/play apparatus. By locking the hubs, the web is not wound off of the hubs and does not become loose within the cassette. If the web should become loose, the web may be ceased or crushed, resulting in loss of information that is stored on the web. For example, where the web is video magnetic tape, any creases or folds in the tape can result in "drop-outs" in the reproduced signal.

It is also important to lock the hubs where the cassette is used with a record/play apparatus which automatically withdraws the web from the cassette for use by the apparatus. More particularly, if the web within the cassette is not properly positioned to be received and manipulated by the automatic loading mechanism within the apparatus, the web, cassette, or apparatus may be damaged. Moreover, this may result in irretrievable loss of program material from the record/play media.

It is also desirable in such cassettes to provide the maximum web length possible to thereby increase the record/play time available with the particular cassette. Toward this end, it is advantageous to minimize the hub diameter while still including a locking mechanism therewith. However, many locking mechanisms heretofore have limited the minimum diameter of the hubs and have thus limited the web length and cassette record/play time. Moreover, such mechanisms may be relatively complex or may not be suitable for relatively thin cassettes.

For example, one such locking mechanism is employed in video cassettes manufactured by Funai Electric Trading Company, Ltd., of Osaka, Japan. These cassettes carry one-quarter inch wide magnetic video tape. The locking mechanisms include an outer tape-carrying hub of relatively large diameter and an inner locking hub which receives the spindle from the video tape apparatus. However, this locking mechanism requires a relatively large diameter tape-carrying hub, thereby limiting the video tape length and thus the cassette play/record time.

Yet, another locking mechanism is disclosed in U.S. Patent No. 3,672,603. There, a tape cartridge includes reels having teeth around the outer edge of the reel flanges. A brake mechanism engages the teeth to prevent reel rotation. This brake mechanism requires, however, a reel flange extending from the reel hub to the outer edge of the reel along with the associated break mechanism, thus making the mechanism not suitable for relatively thin cassettes.

Thus, there is a need for a simple, reliable and compact locking mechanism which can be used with hubs of relatively small diameter and which can be used with generally thin cassettes.

Cross-Reference to Relative Application

This is a Continuation-In-Part of parent application

-3-

of U.S. Serial No. 267,559 filed May 27, 1981.  Some of the subject matter of this application is related to that of U.S. Serial No. 267,560, filed May 27, 1981, the disclosure of which is incorporated herein by reference.

Summary of the Invention

An improved cassette hub locking mechanism in accordance with the present invention overcomes the limitations and disadvantages set forth above and provides a mechanism enabling relatively small diameter web hubs for use in thin cassettes.

In one exemplary embodiment, the locking mechanism includes a hub having a web-carrying portion which receives a play/record apparatus spindle.  The web is connected to a web- carrying portion and the apparatus spindle urges the hub away from the bottom member of the cassette.  A locking flange integral with the hub is disposed generally parallel to the bottom member.  The diameter of the locking flange is only slightly larger than the diameter of the web-carrying portion.  A spring biases the hub toward the bottom member.  Locking means is disposed between the locking flange and the bottom member for substantially preventing the rotation of the hub when the locking flange is engaged with the bottom member and for allowing rotation of the hub when the locking flange is disengaged from the bottom member.  In an exemplary embodiment, a locking means may comprise serrations or teeth on both the bottom member and the locking flange which engage when the locking flange is engaged with the bottom member.

In another exemplary embodiment of the present invention, an improved locking mechanism includes a hub which is adapted to receive and engage a spindle from the record/play apparatus.  The web is connected to and carried by a web-carrying portion of the hub.  A flange or other suitable means limits movement of the hub toward a bottom member of the cassette.  A locking member is disposed between the hub and a top member of the cassette.  The

-4-

locking member abuts the spindle when the spindle is within the hub to disengage the locking member from the hub. Indexing the biasing means such as a leaf spring indexes the locking member with respect to the top member and also biases the locking member toward the hub. Locking means is disposed between the locking member and the hub to prevent .rotation of the hub when it is engaged with the locking member but to allow rotation of the hub when the locking member is moved away therefrom.

A further embodiment of a locking mechanism is useful for a type of cassette wherein a gear or gears are used therein for driving a reel or reels, such as the form of extended play cassette shown and described in said co-pending application Serial No. 267,560. In this embodiment, the teeth of a drive gear cooperate with a locking rib or other protrusions on a housing member of the cassette to thereby function as a locking or braking member as well as a driving member. As in the other embodiments, a spring is used as a biasing element, for a hub portion of the mechanism and the spring normally biases the gear teeth into engagement with a locking rib. A spindle of the recorder or playback apparatus engages the hub to thereby release the gear from locking engagement with the locking rib, and a portion of the spring is engaged by a protrusion of the apparatus. This arrangement significantly reduces the drag in this form of cassette.

Consequently, the hub locking mechanisms in accordance with the present invention are simple and reliable, yet provide a relatively small diameter web-carrying portion to be used within a generally thin cassette.

It is thus an object of the present invention to provide an improved cassette hub locking mechanism.

It is another object of the present invention to provide a hub locking mechanism which has a web-carrying portion of relatively small diameter.

It is a further object of the present invention to

-5-

provide a hub locking mechanism suitable for use in relatively thin cassettes.

It is still another object of the present invention to provide a hub locking mechanism which provides a relatively simple and secure lock or brake action but which, when disengaged, presents minimum drag.

These and other objects and advantages of the present invention are clear from the following detailed description taken in conjunction with the drawings in which:

Brief Description of the Drawings

Figure 1 is a perspective view of an exemplary cassette in accordance with the present invention:

Figure 2 is an exploded view of one embodiment of an exemplary locking mechanism in accordance with the present invention;

Figure 2A is a side view of a portion of the bottom member of Figure 2 taken along the line 2A-2A of Figure 2;

Figure 3 is an assembled section view of the cassette of Figure 2 taken along the line 3-3 thereof;

Figure 4 is a side view of the tape hub of Figure 2;

Figure 5 is a top view of the hub of Figure 4;

Figure 6 is a partial exploded view of a cassette employing another exemplary embodiment of a locking mechanism in accordance with the present invention;

Figure 7 is an assembled section view of Figure 6 taken substantially along the line 7-7 thereof;

Figure 8 is a side view of the tape hub of Figure 6;

Figure 9 is a top view of the tape hub of Figure 6;

Figure 10 is a side view of the locking member of Figure 6;

Figure 10A is a perspective view of an alternative form of a locking member of Figure 10.

-6-

Figure 11 is a top view of the locking member of Figure 6;

Figure 12 is an exploded view of a cassette employing yet another embodiment of a locking mechanism in accordance with the present invention;

Figure 13 is a sectioned view of an assembled cassette as in Figure 12 taken along line 13-13 thereof;

Figure 14 is a side view of the tape hub of Figure 12;

Figure 15 is a top view of the tape hub of Figure 12;

Figure 16 is a side view of the locking member of Figure 12;

Figure 17 is a top view of the locking member of Figure 12;

Figure 18 is a partially exploded view of another form of cassette having extended play capabilities and employing another exemplary embodiment of a locking mechanism in accordance with the present invention;

Figure 19 is a partial cross-sectional view illustrating the locking mechanism of the cassette of Figure 18 in a disengaged or unlocked condition; and

Figure 20 is a partial cross-sectional view similar to Figure 19, but illustrating the locking mechanisms in an engaged or locked position.

## Description of Preferred Embodiments

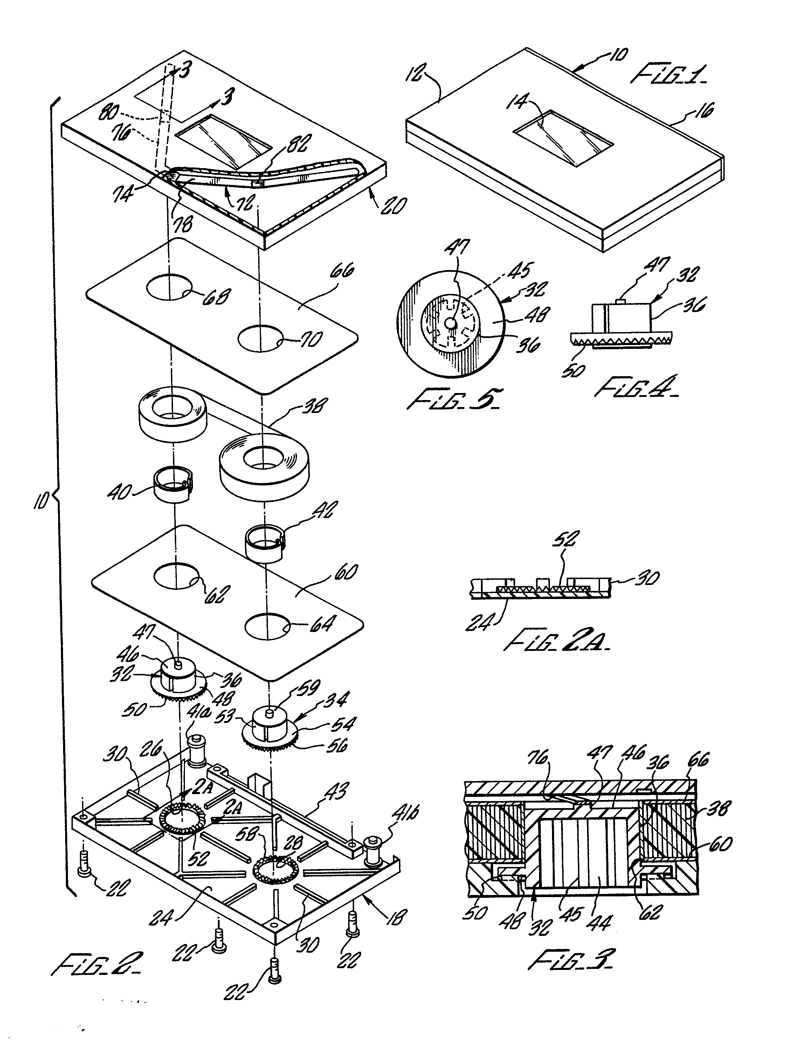

With reference to Figure 1, an exemplary cassette 10 which may be used with the locking mechanism of the present invention includes a housing 12 having a window 14 in the top of the housing 12. The cassette 12 may be closed at the front by means of a pivoted door 16 as is well known to those skilled in the art.

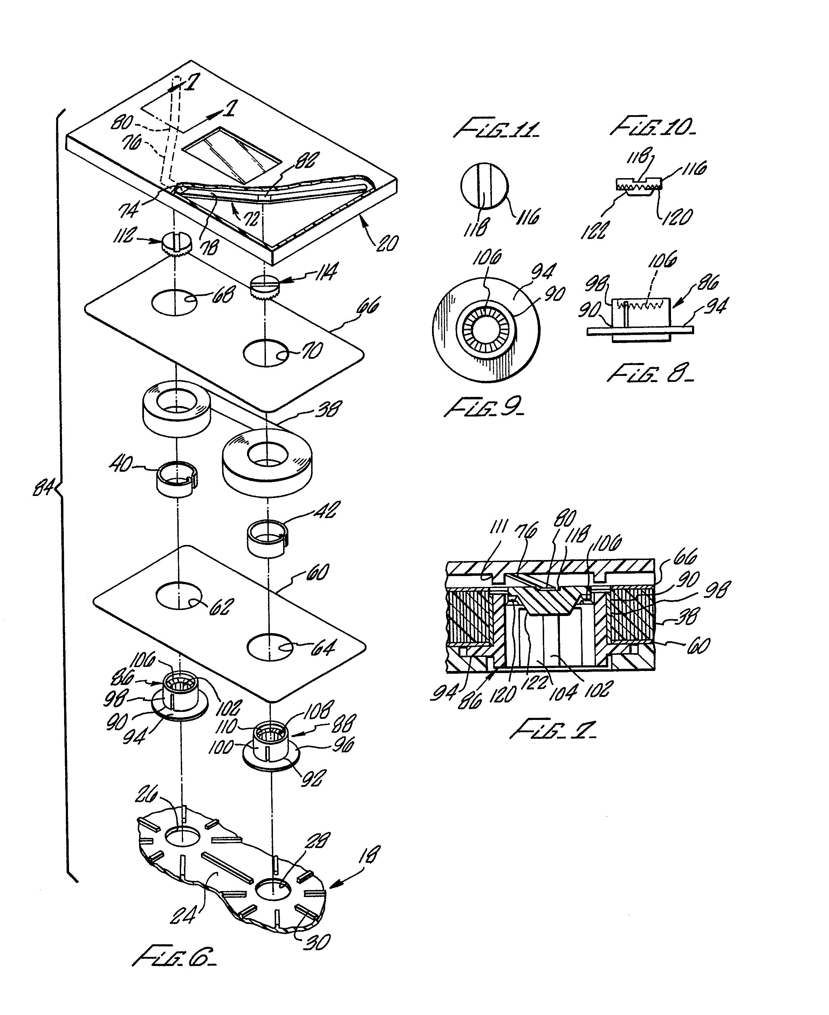

Turning to Figure 2, the cassette housing 12 includes a bottom section 18 and a top section 20 which may be held together by a plurality of screws 22. The bottom section 18 includes a bottom member 24 that has formed into it two

-7-

circular openings 26 and 28 which are adapted to receive the spindles of a record/play apparatus such as a video cassette recorder. A plurality of reinforcing ribs 30 serve to reinforce the bottom member 24.

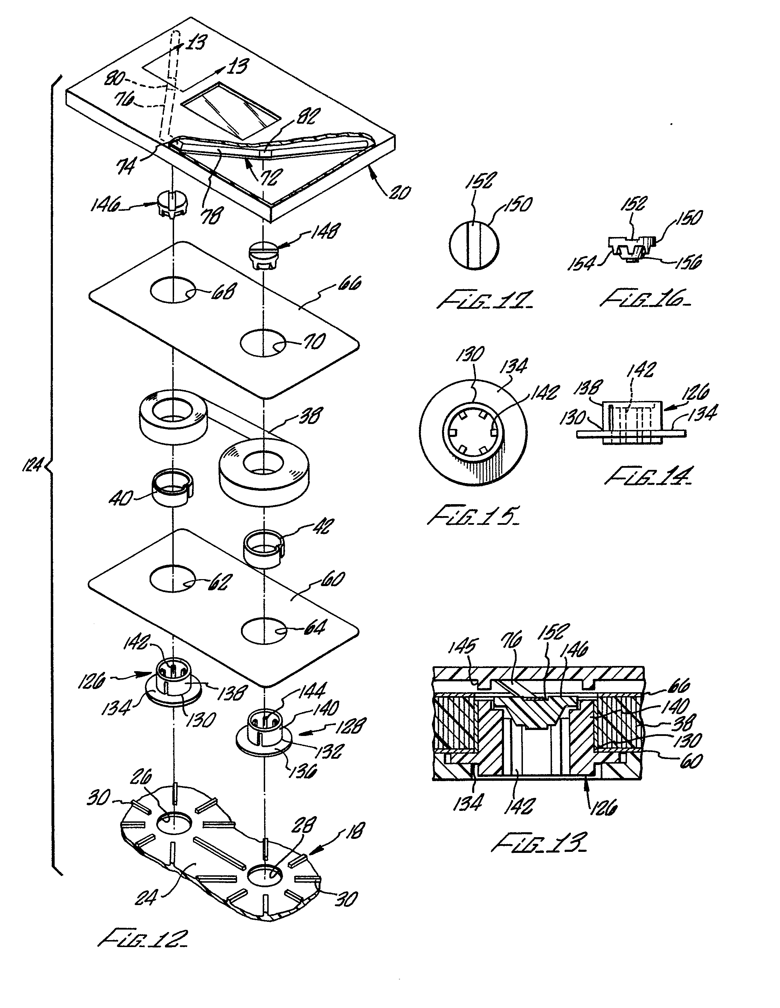

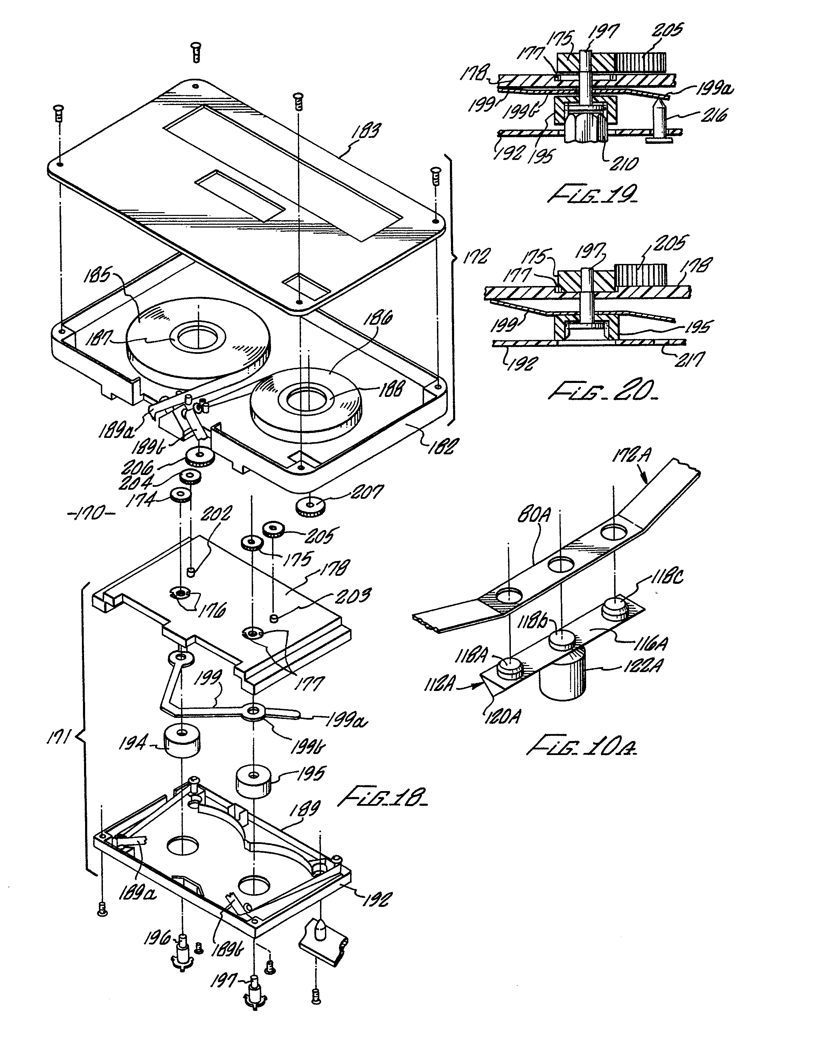

Two hubs 32 and 34 are disposed within the cassette 10 in coaxial alignment with the openings 26 and 28 respectively. As seen in Figures 3-5, the hub 32 includes a generally cylindrical web-carrying portion 36. A first end of a web 38 of suitable record/play media such as video magnetic tape is secured to the hub 32 by suitable means such as a clip 40. A similar clip 42 secures a second end of the web 38 to the hub 34.

The web 38 is guided by rollers 41a and 41b between the hubs 32 and 34. An open edge 43 of the cassette 10 provides access to the web 38. When not in use, the edge may be covered by the door 16.

An interior region 44 of the web-carrying portion 36 has a plurality of vertical ribs 45 adapted to receive and engage a drive spindle (not shown) of a suitable recordplay apparatus such as a video cassette recorder. The web-carrying portion 36 includes an upper closed end wall 46. The length of the web-carrying portion 36 is such that when the cassette 10 is in an operating position within the apparatus and the apparatus spindle is positioned within the interior region 44 of the web-carrying portion 36, the end wall 46 abuts the spindle thus carrying the hub 34 upwardly a predetermined amount. The purpose of this upward displacement is described hereinbelow. A projection 47 is concentrically disposed on the top of the end wall 46.

The hub 34 further includes an annular flange 48 near the lower end of the hub 34. The lower surface of the flange 48 is serrated to define a plurality of teeth 50 radiating from the web-carrying portion 36. Similarly, serrations about the opening 26 on the bottom member 24 define a plurality of teeth 52 of similar pitch to the

-8-

teeth 50. As seen in Figure 3, the reinforcing ribs 30 terminate near the teeth 52.

The hub 34 is identical to the hub 32 as described above and has a web-carrying portion 53. An annular flange 54 has a plurality of teeth 56 on the lower surface thereof which are adapted to engage a plurality of teeth 58 surrounding the opening 28. The ribs 30 terminate near the teeth 58. A projection 59 is concentrically located on the top of the hub 34.

A gasket 60 is between the web 38 and the bottom member 24. Two openings 62 and 64 in the gasket 60 receive the hubs 32 and 34. As seen with reference to Figure 3, the opening 62 in the gasket 60 is of such a diameter that the gasket is between the flange 48 and the web 38. A similar relationship exists for the opening 64, flange 54 and web 38. A second gasket 66 similar to the gasket 60 is between the web 38 and the top section 20. Openings 68 and 70 in the gasket 66 are coaxial with the hubs 32 and 34. The gaskets 60 and 66 can be slightly corrugated and can be of a carbon impregnated polyester (mylar) material to assist in the packing of the web 38 as it is wound about the hubs 32 and 34.

A generally V-shaped spring 72 is fixed to the top section 20 at the apex 74 of the spring 72. From the fixed apex 74, the two arms 76 and 78 are angled slightly downwardly and away from the top section 20 to flat generally horizontal bearing pads 80 and 82. The arms 76 and 78 thereafter angle slightly upward toward the top section 20. The outer ends of the arms 76 and 78 slideably rest against the top section 20.

In use, the locking mechanism of the present invention as set forth in Figure 2, locks the hubs 32 and 34 when the cassette is removed from the apparatus. In this instance, the bearing pads 80 and 82 contact the projections 47 and 59, thus urging the hubs 32 and 34 downwardly to engage the teeth 50 and 56 with the teeth 52 and 58.

—9—

When so engaged, the hubs 32 and 34 will not rotate, thus locking the hubs in position.

When the cassette 10 is inserted into the apparatus, the spindles of the apparatus are positioned within the hubs 32 and 34. With respect particularly to hub 32 is shown in Figure 3, the apparatus spindle abuts the upper closed end wall 46, thereby removing the hub 32 upwardly against the force of the spring 76 and disengaging the teeth 50 and 52. The hub 32 is now free to rotate with the apparatus spindle. Similarly, the apparatus spindle within the hub 34 raises that hub, disengaging the teeth 56 and 58. The vertical displacement of the hubs 32 and 34 is such that the flanges 48 and 54 remain within the regions defined by the ends of the ribs 30 near the teeth 52 and 58, thereby preventing the hubs 32 and 34 from becoming substantially unaligned with the opening 26 and 28.

Thus, the locking mechanism of Figure 2 allows the web-carrying portions 36 and 53 of the hubs 32 and 34 to be of a relatively small diameter. The flanges 48 and 54 are similarly of a relatively small diameter and do not extend significantly from the hubs 32 and 34. The flanges 48 and 54 are, therefore, not between the gasket 60 and the ribs 30, allowing for a more compact cassette.

With reference now to Figure 6-11, another embodiment of the present invention is shown for use in a cassette 84. The bottom section 18 (show partially), gaskets 60 and 66, clips 40 and 42, the web 38, the top section 20, and the spring 72 as described with reference to Figure 2. Two hubs 86 and 88 are concentrically disposed with respect to the openings 26 and 28. The hubs 86 and 88 each have hollow cylindrical bodies 90 and 92. Annular flanges 94 and 96 are formed near the lower end of the cylindrical bodies 90 and 92, the flanges 94 and 96 being generally horizontal to the bottom member 24 and slightly larger in diameter than the bodies 90 and 92. The ribs 30 terminate near the flanges 94 and 96 to provide a predetermined clearance therebetween. The web 38 is connected to and

-10-

wound about web-carrying portions 98 and 100 of the bodies 90 and 92 above the flanges 94 and 96.

As seen most clearly in Figure 7, a plurality of vertical ribs 102 within an interior region 104 of the hub 86 are adapted to engage a spindle of the record/play apparatus (not shown). The ribs 102 terminate near the upper open end of the body 90. A plurality of upwardly projecting serrations or teeth 106 are above the ribs 102 in the interior region 104. Similarly, the hub 88 includes ribs 108 and teeth 110.

A shoulder 111 projects downwardly from the top section 20, the shoulder 111 being approximately the same diameter as the body 90, thus limiting upward movement of the hub 86. A similar shoulder (not shown) is provided for the hub 88.

Two locking members 112 and 114 are positioned between the hubs 86 and 88 and the top section 20. As seen in Figures 10 and 11, each of the locking members 112 and 114 has a generally flat horizontal cap 116 with a horizontal slot 118 formed in the top thereof. The slot 118 of each of the locking members 112 and 114 is slightly wider than the bearing pads 80 and 82 of the spring 72. A plurality of downwardly projecting serrations or teeth 120 are on the bottom of the cap 116 near the outer edge thereof. A tapered member 122 projects downwardly from the bottom of the cap, the teeth 120 being disposed about the projection 122.

In use, and when the cassette 84 is removed from the apparatus, the spring 72 urges the locking members 112, 114 downwardly into the hubs 86 and 88, the flanges 94 and 96 limiting the downwardly movement thereof. The teeth 120 of each of the locking members 112, 114 engage the teeth 106 and 110 of the hubs 86 and 88. Additionally, the bearing pads 80 and 82 of the spring 72 engage the slots 118 in the locking members 112, 114, preventing rotation of the members 112, 114 and the hubs 86 and 88. In this way, the hubs are locked in place and will not inadvertently rotate

-11-

with the cassette removed from the apparatus. It is to be noted that the locking members may be fixed to the spring in other suitable ways such as by bonding or staking.

However, when the cassette is inserted into the apparatus, the apparatus spindles are disposed within the hubs 86 and 88. The tops of the spindles about the locking members 112, 114 pushing the locking members 112, 114 upwardly to disengage the teeth 120 of the locking members 112, 114 from the teeth 106 and 110 of the hubs 86 and 88. Consequently, the hubs 86 and 88 are free to rotate with the apparatus spindles.

Figure 10A illustrates an alternative form of the locking members 112 and 114 of Figure 6 in the form of a locking member 112A. The locking member 112A comprises an elongated member 116A serving the function of the cap 116 of Figures 10-11, and this member has a pointed lower edge 120A which serves the function of the downward projections or teeth 120 of the locking member of Figure 10. In this case, the member 116A is long enough to extend from one side to the other of the upward projections or teeth 106 of the hub 86, and, thus, the lower pointed edge 120A effectively comprises two serrations or teeth which engage the serrations 106 of the hub 86. The locking member 112A has a central downward projection 112A which can loosely fit within the hollow cylindrical body 90 of the hub 96 of Figures 8-9, and effectively serves the function of the tapered member 122 of the locking member 112 of Figure 10. Furthermore, the member 112A has upper projections 118A-C and these engage and are heat sealed with correspondings openings in a bearing pad section 80A of a spring 72A. As will be apparent, the spring 72A serves the same function as does the spring 72 of Figure 6, and biases the locking member 112A downwardly such that the outer portions of the pointed edge 120A engage serrations 106 of the hub. The locking member of Figure 10A is less expensive to manufacture than some of the other locking members described herein, and the tolerances are not as critical with respect to manufacture and assembly of the spring 72A inasmuch as only two teeth are effectively provided by edge 120A which engage the serrations 106 of the hub 86 rather than approximately thirty serrations 120 as typically are provided on the locking member 112.

Thus, this embodiment of the present invention also provides the web-carrying portions 98 and 100 of a relatively small diameter while still allowing the hubs to be locked. The locking mechanism also can be used in a relatively thin cassette.

Yet another embodiment of a locking mechanism in accordance with the present invention is shown in Figures 12-17. A cassette 124 in accordance therewith includes a bottom section 18 (shown partially), gaskets 60 and 66, the web 38, clips 40 and 42, the top section 20 and the spring 72 as described hereinbefore. Two hubs 126 and 128 are coaxially aligned with the openings 26 and 28. Each of the hubs 126 and 128 includes bodies 130, 132, annular flanges 134, 136, web-carrying portions 138, 140, and internal vertical ribs 142 and 144 similar to the bodies 90 and 92, flanges 94, 96, web-carrying portions 98, 100, and ribs 102, 108 described above with respect to hubs 86 and 88. A shoulder 145 projects downwardly from the top section 20, the shoulder 145 being approximately the same diameter as the body 130, thus limiting the upward movement of the hub 126. A similar shoulder (not shown) is provided for the hub 128.

Two locking members 146 and 148 are between the hubs 126, 128 and the top section 20. Each of the locking members 146, 148 includes a flat circular cap 150 with a horizontal slot 152 formed therein. The slot 152 in each of the locking members 146, 148 is adapted to engage the bearing pads 80 and 82 respectively. A plurality of downwardly projecting fingers 154 project from the cap 150, the fingers 154 in each of the locking members 146, 148 being able to engage the ribs 142, 144 respectively. A

-13-

tapered conical portion 156 projects downwardly from the cap 150.

In use, the locking members 146, 148 cooperate with the hubs 126 and 128 in a manner similar to the locking members 112, 114 and the hubs 86, 88 of Figure 6. With continued reference to Figure 12, when the cassette 124 is removed from the apparatus, the spring 72 via the bearing pads 80 and 82 urge the locking members 146 and 148 downwardly into the hubs 126, 128. The fingers 154 on the locking members 146, 148 engage the ribs 142 and 144. The slots 152 within the caps 150 of the locking members 146, 148 prevent the members 146, 148 from rotating and thus prevent rotation of the hubs 126, 128. The flanges 134, 136 limit the downward displacement of the locking members 146, 148 and the hubs 126, 128.

When the cassette 124 is inserted into the apparatus, the apparatus spindles travel upwardly within the hubs 126, 128 to abut and lift the locking members 146, 148. This disengages the fingers 154 from the ribs 142, 144 thereby allowing rotation of the hubs 126 and 128 with the apparatus spindles.

It is thus seen that the locking mechanisms in accordance with the present invention provides simple, reliable mechanisms which allow the web-carrying portions of hubs to be of a relatively small diameter, yet also allowing the cassette to be relatively thin. A minimum amount of space within the cassette is required for the locking mechanisms, thus, providing a greater web length to be used for longer play/record time. In the exemplary embodiments shown, cassette playing time was extended approximately one-third.

Turning now to Figures 18-20, another form of locking mechanism for a cassette is illustrated. The form of the cassette itself differs from that of the earlier figures inasmuch as the earlier figures illustrate a relatively standard form of cassette wherein tape directly goes from one reel or hub to another; whereas, the cassette of Figure 18 involves the use of a tape magazine from which tape is

-14-

fed into a cassette housing which otherwise is substantially identical to the form of cassette shown in Figures 2, 6, and 12. The form of cassette illustrated in Figure 18 is like that described in said co-pending application Serial No. 267,560, and basically comprises an adapter 171 and a magazine 172, all joined together as an integral unit. The adapter 171 is substantially identical into the cassette receiving portion of a recorder, such as a video recorder of the type presently marketed by Technicolor, Inc. However, the adapter 171 itself does not contain the reels of tape, but basically serves to feed the tape into the recorder. The reels of tape are contained in the magazine 172 which, as will be apparent from Figure 18, can be physically larger than the adapter 171 and therefore can contain a greater amount of tape therein. The spindles (not shown) of the recorder/playback unit engaged adapter hubs in the adapter 11 rather than the central tape hubs of the magazine 172. Since the tape hubs are not directly engaged by the spindles as is the case with the other cassettes herein, they are linked to the tape hubs by a suitable gearing arrangement which will be described below. A typical cassette as illustrated in Figure 18 can have a play/record capacity of approximately two and one-half hours; whereas, the cassette of Figures 2, 6, and 12 typically has a capacity of approximately three-quarters hour.

A cassette locking mechanism is needed in the cassette of Figure 18 for the same reasons discussed previously. Since a substantially greater amount of tape can be used in the magazine, however, drag of the locking or braking mechanism becomes an even more significant factor. The locking mechanism used in the cassette of Figures 18-20 employs drive gears 172 and 175 for a driving function as will be described subsequently, but also uses these gears as locking members in association with locking ribs 176-177 formed on an intermediate cassette housing 172. The gear

-15-

175 and locking rib 177 are shown in greater detail in Figures 19-20.

Considering the cassette of Figure 18 in greater detail, the magazine portion 172 thereof comprises a magazine core or body 182 and a cover 183. The body contains a take-up reel of tape 185 and a supply reel 186 arranged on suitable hubs or tape cores 187 and 188, respectively. A length of the tape 189 extends from the magazine 172 and into and through the adapter portion 171 of the cassette. Suitable guide pins and rollers as shown are provided for this purpose, and are described in greater detail in said co-pending application.

The adapter portion 171 comprises the intermediate housing 178 and a bottom housing 192. The bottom housing further includes adapter drive hubs 194 and 195 with respective spindles 196 and 197. The upper ends of the spindles 196-197 extend through the intermediate housing 178 and are secured to the respective drive gears 174-175 as best seen in Figures 19-20. A leaf spring 199 is secured to the inner part of the housing 178 and normally biases the drive hubs 194-195 downwardly as best seen in Figure 20. The upper surface of the housing 178 has studs 202-203 on which respective intermediate gears 204 and 205 are disposed for rotation. Gears 206 and 207 are connected to the respective tape hubs 87-88 by shafts (not shown) on these hubs.

The drive spindles of the recorder/playback unit, such as a video cassette recorder, extend upwardly into the hubs 194 and 195 as indicated at 210 in Figure 19 to thereby engage shoulders within the hubs to transmit the recorder spindle motion to the cassette spindles 196-197. The spindles 196-197 in turn drive the drive gears 174-175, and these gears drive the tape hubs 187 and 188 via the gears 204-205 and 206-207. As will be seen from Figure 20, when the cassette is removed from the recorder, the spring 199 biases the hub 195 downwardly, thereby causing the teeth of drive gear 175 to engage the locking ribs 177.

-16-

This locks the gear train mechanism (e.g., 175, 205, 207 and hub 188) such that the tape reels 185 and 186 are suitably locked. When the cassette is inserted into the recorder, the recorder spindles (e.g., 210) engage the hubs 194-195 thereby raising these hubs and the respective spindles 196 and 197 as seen in Figure 19. This action likewise raises the attached gears 174 and 175 and these gears become disenaged or unlocked from the locking ribs 176-177. Preferably, the spring 199 is engaged by a protruding member of the recorder so that it is moved above the upper surface of the hubs 194-195 when in the unlocked position and does not cause drag on the hubs. That is, preferably the spring is raised by a member other than the hubs 194-195 to thereby reduce drag on the tape driving mechanism. Some video recorders, for example, include a photocoupler 216 as seen in Figure 19. The lower housing 192 of the cassette can have an aperture 217 through which the photocoupler 216 can extend when the cassette is fully inserted and lowered into the recorder, the upper end of the coupler 216 engages an outer end 199A of the spring 199 to thereby raise the body portion 199B of the spring 199 away from and out of contact with the hub 195 as seen in Figure 19.

Thus, in the embodiment of Figures 18-20, a cassette locking mechanism is illustrated wherein a drive gear (175) forming a part of a spindle assembly (197, 175) has teeth which engage a protrusions (177) in a housing member (178) of the cassette to provide the locking function. The locking mechanism is released by raising the hub (195) upon insertion of the recorder spindle (210), and the biasing force can be overcome by upward movement of the hub (195) but, preferably, is released by a projection (coupler 216) of the recorder unit so as to further reduce and minimize drag in the cassette mechanism.

While exemplary embodiments of the invention have been described, it is to be understood that the invention is not limited to the details herein explained. It is expected

-17-

that those skilled in the art will recognize numerous
variations and equivalents which come within the spirit of
the invention and which are intended to be included herein.

-18-

Claims:

1.      A locking mechanism for use in a cassette which carries a web of storage material such as video tape, and wherein the cassette includes a cassette body with at least first and second housing members, the cassette being adapted for use with record/play apparatus having a spindle adapted to engage a drive hub in the cassette for causing the web to be wound upon a web core, the locking mechanism comprising

drive means connected between the hub and the web core, said hub being connected to said drive means for rotating said core and being disposed in said cassette body between said first and second housing members,

one of said housing members having at least one locking rib thereon engageable by said drive means for locking the drive means with respect to said housing member and thereby locking said web core and web and,

spring means disposed in said cassette body and normally biasing said hub in a direction to cause said drive means to engage said locking rib, said hub when engaged by a spindle of record/play apparatus causing said drive means to disengage from said locking rib.

2.      A mechanism as in claim 1 wherein

said drive means comprises a drive gear and means coupling said drive gear with said hub, and teeth of said drive gear engage the rib of said housing member for locking said web, and

said spring means being adapted to be contacted by engaging means for removing the bias normally provided thereby on said hub and for causing said spring means to substantially disengage from said hub to minimize drag, said engaging means comprising a projection of the record/ play apparatus for engaging said spring means when said cassette is seated in a cassette receiving receptacle of said apparatus.

-19-

3.    A mechanism as in claim 1 wherein
said drive means comprises a drive gear coupled with a spindle which in turn is coupled with said hub, means coupling said drive gear to said web core for rotating said web core, said drive gear having teeth for engaging said locking rib of said housing member for locking said web, and
said spring means being adapted to be contacted by engaging means for removing the bias normally provided thereby on said hub and causing said spring means to substantially disengage from said hub to minimize drag, said engaging means comprising a projection of the record/play apparatus for engaging said spring means when said cassette is seated in a cassette receiving receptacle of said apparatus.

4.    A locking mechanism for use in a video cassette which carries a web of video tape, and wherein the cassette includes a cassette body with at least first and second housing members, the cassette being adapted for use with video record/play apparatus having a spindle adapted to engage a drive hub in the cassette for causing the tape web to be wound upon a web core, the locking mechanism comprising
drive gear means connected between the hub and the web core, said hub being connected to a gear of said drive gear means for rotating said core, and said hub being disposed in said cassette body between said first and second housing members,
one of said housing members having at least one locking rib thereon engageable by said gear of said drive means for locking the drive means with respect to said housing member and thereby locking said web core and tape web and,
spring means disposed in said cassette body and normally exerting a biasing force on said hub in a direction to cause said gear to engage siad locking rib, said

hub when engaged by a spindle of record/play apparatus causing said gear to disengage from said locking rib, and said spring means having a portion engageable by a projection of the record/play apparatus to substantially remove the biasing force from said hub.

5.    A locking mechanism for use in a video cassette which carries a web of video tape, and wherein the cassette includes a cassette body with at least first and second housing members, the cassette being adapted for use with video record/play apparatus have spindles adapted to engage drive hubs in the cassette for causing the tape web to be wound from one web core to another, the locking mechanism comprising

drive gear means connected between each hub and web core, each of said hubs being connected to a respective gear of said drive gear means for rotating the respective web core, and said hubs being disposed in said cassette body between said first and second housing members,

one of said housing members having locking ribs thereon engageable by said gears of said drive means for locking the drive means with respect to said housing member and thereby locking said web cores and tape web and,

spring means disposed in said cassette body and normally exerting a biasing force on said hubs in a direction to cause said gears to engage said locking ribs, said hubs when engaged by respective spindles of record/play apparatus causing said gears to disengage from said locking ribs, and said spring means having a portion engageable by a projection of the record/play apparatus to substantially remove the biasing force from said hubs.

1/4

FIG.1.

FIG.5.

FIG.4.

FIG.2A.

FIG.2.

FIG.3.

FIG. 11

FIG. 10

FIG. 9

FIG. 8

FIG. 7

FIG. 6

Fig.12

Fig.17

Fig.16

Fig.15

Fig.14

Fig.13

FIG. 19.

FIG. 20.

FIG. 18.

FIG. 10a.

0070616

European Patent
Office

**EUROPEAN SEARCH REPORT**

Application number

EP 82 30 2719

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | IBM TECHNICAL DISCLOSURE BULLETIN, vol. 14, no. 8, January 1972, pages 2339,2340, New York, USA W.G. JACKSON et al.: "Tape cassette" * Whole document * | 1 | G 11 B 23/04 |
| X | DE-B-1 099 755 (PROTONA PRODUKTIONSGESELLSCHAFT FUR ELEKTRO-AKUSTISCHE GERATE GmbH) * Column 1, lines 1-10; column 1, lines 30-61; column 2, line 40 - column 3, line 14; claims 1,2 * | 1 | |
| D,A | US-A-3 672 603 (CARTRIDGE T.V. INC.) * Column 2, lines 9-15; column 4, line 58 - column 5, line 30; figures 3,4; claims 2,3,5,8 * | 1,4,5 | |
| | | | **TECHNICAL FIELDS SEARCHED (Int. Cl. ³)** |
| A | GB-A-1 454 764 (CIBA-GEIGY AG) * Page 1, lines 8-68; figures 1,2; claim 1 * | 1 | G 03 B 17/00 G 03 B 21/00 G 11 B 15/00 G 11 B 23/00 |

The present search report has been drawn up for all claims

| Place of search | Date of completion of the search | Examiner |
|---|---|---|
| THE HAGUE | 25-08-1982 | BROCK T.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82